# EUROPEAN PATENT APPLICATION

(11) **EP 3 211 546 A1**
(43) Date of publication of application: **30.08.2017**
(21) Application number: 16200166.3
(22) Date of filing: 23.11.2016
(51) Int. Cl.: G06F 17/30

(54) **PICTURE ACQUIRING METHOD AND APPARATUS, COMPUTER PROGRAM AND RECORDING MEDIUM**

(30) Priority: 29.02.2016 CN 201610113450
(71) Applicant: Beijing Xiaomi Mobile Software Co., Ltd., Beijing 100085 (CN)
(72) Inventor: XING, Xinyan, Beijing, 100085 (CN); MA, Xuan, Beijing, 100085 (CN); LI, Haohua, Beijing, 100085 (CN); LI, Xiaoyin, Beijing, 100085 (CN); LI, Haifeng, Beijing, 100085 (CN); GAO, Lei, Beijing, 100085 (CN)
(74) Representative: Hughes, Andrea Michelle

(57) **Abstract**

The present invention provides a picture acquiring method and apparatus, a computer program and a recording medium. One specific embodiment of the method comprises: detecting a target acquiring request made to a first terminal, the target acquiring request requesting acquisition of a target picture; detecting the target picture in a target photo album corresponding to a second terminal other than the first terminal, in response to detection of the target acquiring request; controlling the first terminal to output acquisition response information in response to detection of the target picture, the acquisition response information indicating that the target picture exists in the second terminal. Using this embodiment, there is no need to manually pick out a photo from photo albums when sharing photos with friends, thereby saving time and improving terminal usage efficiency.

## Description

### TECHNICAL FIELD

The present invention is related to the field of terminal technologies, and more particularly to a picture acquiring method and apparatus, a computer program and a recording medium.

### BACKGROUND

With development of terminal technologies, more and more smart terminal devices emerge and are used in people's daily life and work, making daily life more convenient. Currently, most smart terminal devices are able to support a photo shooting function, picture storing and displaying functions and the like. Usually, users will store photos shot in daily life in electronic photo albums (for example, local photo albums of smart terminal devices or cloud photo albums). In the related arts, if a user wants to share some photos in an electronic photo album of his/her friend or family member, the friend or family member needs to manually pick out the photos to be shared from the electronic photo album using his/her smart terminal device. Therefore, the above manner of sharing photos is inefficient.

### SUMMARY

To solve the above problem, the present invention provides a picture acquiring method and apparatus, a computer program and a recording medium.

According to a first aspect of embodiments of the present invention, there is provided a picture acquiring method, comprising: detecting a target acquiring request made to a first terminal, the target acquiring request requesting acquisition of a target picture; detecting the target picture in a target photo album corresponding to a second terminal other than the first terminal, in response to detection of the target acquiring request; and controlling the first terminal to output acquisition response information in response to detection of the target picture, the acquisition response information indicating that the target picture exists in the second terminal.

Optionally, detecting the target picture in the target photo album corresponding to the second terminal other than the first terminal comprises: acquiring identification information of the target picture; traversing pictures in the target photo album corresponding to the second terminal to acquire the target picture.

Optionally, the identification information comprises at least one of human face characteristic information and animal fur characteristic information.

Optionally, the target photo album comprises at least one of a local photo album of the second terminal and a cloud photo album corresponding to the second terminal.

Optionally, the acquisition response information comprises at least one of: a number of target pictures included in the target photo album, a catalog of the target pictures included in the target photo album, creation times of the target pictures included in the target photo album and identification information of the second terminal.

Optionally, the acquisition response information comprises the catalog; the method further comprises: detecting a selecting operation with respect to the catalog; and controlling the second terminal to send a target picture indicated by the selecting operation to the first terminal, in response to detection of the selecting operation, wherein the acquisition response information comprises the target picture indicated by the selecting operation.

Optionally, the method further comprises: controlling the second terminal to send the target picture to the first terminal, in response to detection of the target picture, wherein the acquisition response information comprises the target picture.

According to a second aspect of the embodiments of the present invention, there is provided a picture acquiring apparatus, comprising: a first detecting module configured to detect a target acquiring request made to a first terminal, the target acquiring request requesting acquisition of a target picture; a retrieving module configured to detect the target picture in a target photo album corresponding to a second terminal other than the first terminal, in response to detection of the target acquiring request; and a control first module configured to control the first terminal to output acquisition response information in response to detection of the target picture, the acquisition response information indicating that the target picture exists in the second terminal.

Optionally, the retrieving module comprises: an acquiring sub-module configured to acquire identification information of the target picture; and a traversing sub-module configured to traverse pictures in the target photo album corresponding to the second terminal to acquire the target picture.

Optionally, the identification information comprises at least one of human face characteristic information and animal fur characteristic information.

Optionally, the target photo album comprises at least one of a local photo album of the second terminal and a cloud photo album corresponding to the second terminal.

Optionally, the acquisition response information comprises at least one of: a number of target pictures included in the target photo album, a catalog of the target pictures included in the target photo album, creation times of the target pictures included in the target photo album and identification information of the second terminal.

Optionally, the acquisition response information comprises the catalog; and the apparatus further comprises: a second detecting module configured to detect a selecting operation with respect to the catalog; and a second control module configured to control the second terminal to send a target picture indicated by the selecting operation to the first terminal, in response to detection of the selecting operation, wherein the acquisition response information comprises the target picture indicated by the selecting operation.

Optionally, the apparatus further comprises: a third control module configured to control the second terminal to send the target picture to the first terminal, in response to detection of the target picture, wherein the acquisition response information comprises the target picture.

According to a third aspect of the embodiments of the present invention, there is provided a picture acquiring system, the system comprising terminals and a server, the terminal comprising a first terminal and a second terminal, wherein:
the first terminal is configured to send a target acquiring request to the server, the target acquiring request requesting acquisition of a target picture;
the server is configured to: detect the target acquiring request made to the first terminal; detect the target picture in a target photo album corresponding to the second terminal other than the first terminal in response to detection of the target acquiring request; and send a first control command to the first terminal in response to detection of the target picture, the first control command instructing the first terminal to output acquisition response information; and
the first terminal is further configured to output the acquisition response information in response to the first control command, the acquisition response information indicating that the target picture exists in the second terminal.

According to a fourth aspect of the embodiments of the present invention, there is provided a picture acquiring apparatus, comprising: a processor; and a memory configured to store instructions executable by the processor. The processor is configured to: detect a target acquiring request made to a first terminal, the target acquiring request requesting acquisition of a target picture; detect the target picture in a target photo album corresponding to a second terminal other than the first terminal in response to detection of the target acquiring request; and control the first terminal to output acquisition response information in response to detection of the target picture, the acquisition response information indicating that the target picture exists in the second terminal.

In one particular embodiment, the steps of the picture acquiring method are determined by computer program instructions.

Consequently, according to a fifth aspect, the invention is also directed to a computer program for executing the steps of the picture acquiring method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of this invention may produce the following advantageous effects.

According to the picture acquiring method provided by the embodiments of this invention, when a target acquiring request made to a first terminal is detected, a target picture is detected in a target photo album corresponding to a second terminal other than the first terminal, and the first terminal is controlled to output acquisition response information indicating that the target picture exists in the second terminal. As such, there is no need to manually pick out a photo from photo albums when sharing photos with friends, thereby saving time and improving terminal usage efficiency.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 shows a structural diagram of an exemplary system where solutions of this invention can be applied according to an embodiment of the invention.
Fig. 2 is a flow chart showing a picture acquiring method according to an embodiment of the invention.
Fig. 3 is a block diagram of a picture acquiring apparatus according to an embodiment of the invention.
Fig. 4 is a block diagram of a picture acquiring apparatus according to another embodiment of the invention.
Fig. 5 is a block diagram of a picture acquiring apparatus according to yet another embodiment of the invention.
Fig. 6 is a block diagram of a picture acquiring apparatus according to yet another embodiment of the invention.
Fig. 7 is a block diagram of a picture acquiring system according to an embodiment of the invention.
Fig. 8 is a schematic structural diagram of a picture acquiring apparatus according to an embodiment of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

The terms used herein are for the purpose of illustrating the embodiments only, rather than limiting the present invention. The terms "a", "said" and "the" of singular forms used in the present description and the attached claims are also intended to include their plural forms, unless otherwise clearly specified in the context. It can also be appreciated that the term "and/or" as used herein refers to any or all possible combinations of one or more associated items as listed.

It can be appreciated that, while the terms "first", "second", "third" and so on may be used herein to describe various information, such information is not limited to these terms, which are only used to distinguish between different information of the same category. For example, the first information can also be referred to as the second information, and similarly the second information can also be referred to as the first information, without departing from the scope of the present invention. Depending on the context, the term "if" as used herein can be interpreted as "when", "while", or "in response to determining".

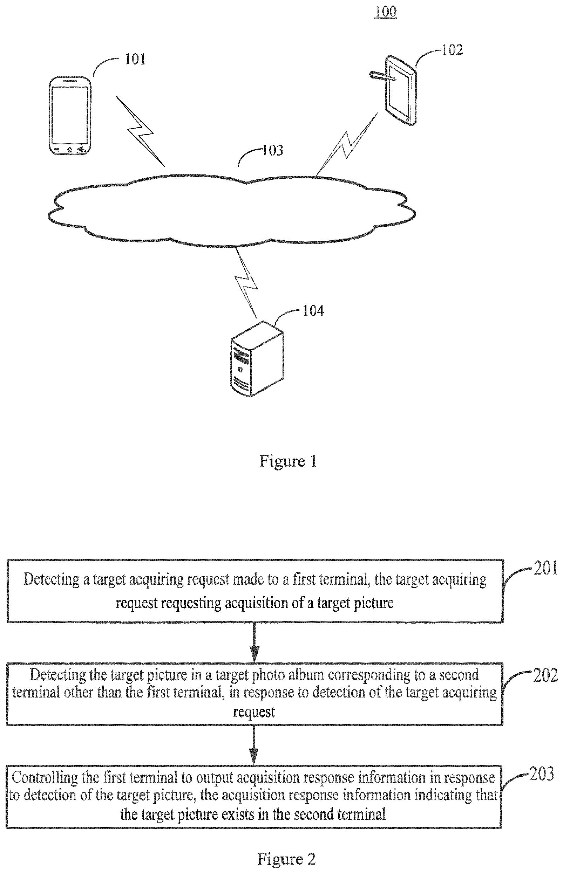

Fig. 1 shows a structural diagram of an exemplary system 100 in which embodiments of this invention can be applied.

As illustrated in Fig. 1, the system 100 may comprise terminal devices 101 and 102, a network 103 and a server 104. The network 103 serves as a medium providing a communication link between the terminal devices 101 and 102 and the server 104. The network 103 may include various types of connections, such as wired or wireless communication links, optical cables or the like.

The terminal devices 101 and 102 may interact with the server 104 via the network 103 to receive or send requests, information or the like. The terminal devices 101 and 102 may be various electronic devices, which include, but are not limited to, smart phones, tablet computers, portable laptop computers, desktop computers, etc. The server 104 may be a server providing various services. The server may store, analyze or perform any other processing on received data, and may also send a control command or the like to the terminal devices. The server may provide services in response to a service request from a user. It may be understood that one server may provide one or more services, and one service may also be provided by multiple servers.

It should be understood that the numbers of the terminal devices, the networks and the servers in Fig. 1 are merely illustrative. As required by practical implementation, there may be any numbers of terminal devices, networks and servers.

Based on the system structure as illustrated in Fig. 1, in this embodiment of this invention, the terminal device 101 or the terminal device 102 may send a target acquiring request to the server 104 via the network 103, the target acquiring request requesting acquisition of a target picture. The server 104 detects the target picture in a photo album corresponding to a terminal device other than the terminal device 101 or the terminal device 102, in response to the target acquiring request. If the target picture is detected, the server 104 may return a control command to the terminal device 101 or the terminal device 102 via the network 103 to control the terminal device 101 or the terminal device 102 to output acquisition response information, the acquisition response information indicating the terminal device where the target picture exists. In the following, this invention will be described in detail in conjunction with specific embodiments.

Fig. 2 is a flow chart showing a picture acquiring method according to an exemplary embodiment. The method may be applied in a terminal or a server. In this embodiment, for the ease of understanding, description is made by taking a terminal device which can support a photographing function and picture storage and display functions as an example. Those skilled in the art could understand that the terminal device may include, but is not limited to, a mobile terminal device such as a smart phone, a smart wearable device, a tablet computer, a personal digital assistant, a portable laptop computer, a desktop computer or the like. The method may comprise the following steps 201-203.

In step 201, a target acquiring request made to a first terminal is detected, the target acquiring request requesting acquisition of a target picture.

In step 202, the target picture is detected in a target photo album corresponding to a second terminal other than the first terminal, in response to detection of the target acquiring request.

In this embodiment, the target picture is a picture that the first terminal wants to acquire and may contain a certain characteristic (such as a human face characteristic of a certain person or an animal fur characteristic). The target acquiring request is a request requesting acquisition of a target picture. The request may include identification information of the target picture or a condition for identifying the target picture. The target picture may be retrieved from a corresponding photo album, according to the identification information of the target picture or the condition for identifying the target picture.

For example, when a user I wants to acquire a picture containing a user II, a picture containing an image of the user II is a target picture. A target acquiring request may be sent by the user I's terminal (the first terminal), the request including identification information of the user II's image or a condition for identifying the user II's image.

In this embodiment, the first terminal represents a terminal requesting acquisition of the target picture, and the second terminal represents a terminal in whose corresponding photo album a picture is detected. The second terminal may be any terminal other than the first terminal, a terminal associated with any contact in the first terminal, or a terminal belonging to another scope which is not limited in this invention. For a certain specific terminal device, it may serve as a first terminal or a second terminal in different target picture acquiring processes. When serving as a terminal requesting acquisition of a target picture, the terminal device may be the first terminal. When serving as a detected terminal, the terminal device may be the second terminal.

For example, when the user requests acquisition of the target picture using a terminal A, the terminal A may serve as the first terminal. When the user requests acquisition of the target picture using another terminal, it is needed to detect pictures in a photo album corresponding to the terminal A to check whether there exists the target picture. Then, the terminal A may serve as the second terminal.

In this embodiment, after the target acquiring request is detected, the target picture is detected in the target photo album corresponding to the second terminal. The target photo album comprises any one or more of: a local photo album of the second terminal and a cloud photo album corresponding to the second terminal. The local photo album of the second terminal may be any photo album including pictures stored in the second terminal, a shared photo album in the second terminal which allows another terminal or server to access or the like, which will not be limited in this invention. The cloud photo album corresponding to the second terminal may be a cloud photo album corresponding to an account of a certain client being logged-in in the second terminal, or multiple cloud photo albums corresponding to accounts of multiple clients being logged-in in the second terminal.

First, the identification information of the target picture is acquired. Then, pictures in the target photo album corresponding to the second terminal are traversed to acquire the target picture. The identification information comprises one or more of: human face characteristic information and animal fur characteristic information. For example, the identification information of the target picture may be acquired by performing image identification on a reference picture (such as a selfie, or a photo containing an image of a certain person, or a photo including an image of a pet or the like) which is preset by a user. Then, a target photo album corresponding to the second terminal is found, identification is performed for pictures in all target photo albums respectively by using the identification information of the target picture, and a picture matching the identification information is selected as a target picture.

For example, when the user I wants to acquire a picture containing the user II's image, one or more pictures containing the user II's image may be set as reference pictures in advance first, and the reference pictures may be subjected to human face identification so as to acquire human face identification information of the user II. Then, all target photo albums are found, and identification is performed for each picture in the target photo albums by using the human face identification information of the user II, so as to obtain a picture containing the user II's image in the target photo albums as a target picture.

In step 203, the first terminal is controlled to output acquisition response information, in response to detection of the target picture, the acquisition response information indicating that the target picture exists in the second terminal.

In this embodiment, after the target picture is detected, the first terminal is controlled to output acquisition response information, the acquisition response information indicating that the target picture exists in the second terminal. The acquisition response information comprises any one or more of: a number of target pictures included in the target photo album; a catalog of the target pictures included in the target photo album; creation times of the target pictures included in the target photo album; and identification information of the second terminal.

In one implementation of this embodiment, the acquisition response information comprises the catalog of the target pictures. The method further comprises: detecting a selecting operation with respect to the catalog. The second terminal is controlled to send a target picture indicated by the selecting operation to the first terminal, in response to detection of the selecting operation. The acquisition response information may further comprise the target picture indicated by the selecting operation. For example, when target pictures are detected, the first terminal may display the catalog of the target pictures on a screen for the user to select therefrom. The user may select, by using the first terminal, one or more target pictures that he/she wants to acquire. The corresponding second terminal is controlled to send the target pictures selected by the user to the first terminal, in response to detection of the selecting operation.

In another implementation of this embodiment, the method further comprises: controlling the second terminal to send the target picture to the first terminal, in response to detection of the target picture, wherein the acquisition response information comprises the target picture. In this implementation, after the target picture is detected, the second terminal may be directly controlled to send the detected target picture to the first terminal, and the first terminal displays the target picture on the screen. The user may also store the received target picture in the first terminal.

It needs to be noted that the method may be executed by a server or a terminal. Supposing the method is executed by a server, the server first detects a target acquiring request made to a first terminal in step 201. For example, the first terminal sends a target acquiring request to the server, and the server detects the target acquiring request made to the first terminal in real time. The target acquiring request requests acquisition of a target picture and includes a condition for retrieving the target picture (such as identification information of the target picture or a condition for identifying the target picture), in order for the server to retrieve the target picture.

Next, in step 202, the server detects the target picture in a target photo album corresponding to a second terminal other than the first terminal, in response to detection of the target acquiring request. For example, after detecting the target acquiring request, the server determines a photo album address of the target photo album first. For example, account numbers or identifiers of all the contacts are acquired from the first terminal. Then, photo albums associated with the account numbers or identifiers of these contacts are determined as target photo albums, and addresses of the target photo albums are acquired. Next, the server accesses the target photo albums in sequence according to the above addresses, and traverses each picture stored in the target photo albums according to the condition for identifying the target picture in order to identify the target image.

Finally, in step 203, the server controls the first terminal to output acquisition response information, in response to detection of the target picture. For example, after the target picture is detected, the server determines the acquisition response information first and then sends an output command to the first terminal. The output command includes the acquisition response information to control the first terminal to output the acquisition response information.

In one implementation of this embodiment, the acquisition response information may comprise a catalog of target pictures. The method may further comprise: the server detecting, through the first terminal, a selecting operation with respect to the catalog. The server sends a command to the second terminal corresponding to a target picture indicated by the selecting operation, in response to detection of the selecting operation. The command controls the second terminal to send the target picture indicated by the selecting operation to the first terminal.

In another implementation of this embodiment, the method further comprises: sending, by the server, a command to the second terminal corresponding to the target picture, in response to detection of the target picture. The command controls the second terminal to send the target picture to the first terminal, wherein the acquisition response information comprises the target picture.

If the method is executed by a terminal, the first terminal first detects a target acquiring request made by a user to the first terminal in step 201. For example, when the user wants to acquire a target picture through the first terminal, it is necessary to perform a predetermined operation on the first terminal (such as, an operation preformed through an operation interface output by a client on the first terminal for requesting acquisition of the target picture). The first terminal detects the operation performed by the user thereon in real time.

Next, in step 202, the first terminal detects, via the server, the target picture in a target photo album corresponding to the second terminal other than the first terminal, in response to detection of the target acquiring request. For example, after detecting an operation of the user to acquire the target picture, the first terminal determines that the target acquiring request is detected. The first terminal sends a request to the server, in response to detection of the target acquiring request. The request includes a condition for retrieving the target picture (for example, identification information of the target picture or a condition for identifying the target picture), in order for the server to retrieve the target picture. After receiving the request, the server determines photo album addresses of target photo albums first. Next, the server accesses the target photo albums in sequence according to the above addresses, traverses each picture stored in the target photo albums according to the condition for identifying the target picture in order to identify the target picture, and feeds back a retrieving result to the first terminal.

Finally, in step 203, a controller of the first terminal controls the first terminal to output acquisition response information, in response to detection of the target picture. For example, after the target picture is detected, the server first determines the acquisition response information and then transmits an output command to the first terminal, the output command including the acquisition response information. After receiving the command, the first terminal outputs the acquisition response information under the control of its controller.

In one implementation of this embodiment, the acquisition response information may comprise a catalog of target pictures. The method may further comprise: detecting, by the first terminal, the user's selecting operation with respect to the catalog. The first terminal sends a request to the server, in response to detection of the user's selecting operation, the request comprising information of a target picture indicated by the selecting operation. The server sends a command to the corresponding second terminal according to the request, the command controlling the second terminal to send the target picture indicated by the selecting operation to the first terminal.

In another implementation of this embodiment, the method may further comprise: sending, by the first terminal, a picture acquiring request to the server, in response to detection of the target picture; and then sending a command, by the server, to the second terminal corresponding to the target picture, the command controlling the second terminal to send the target picture to the first terminal, wherein the acquisition response information comprises the target picture.

For this embodiment, an application scenario may be as follows. Supposing the user I after participating in a class reunion wants to acquire photos containing himself/herself captured by other classmates, then the user I may send a target acquiring request to the server through a terminal A (the first terminal), the request including a photo of the user I or human face identification information of the user I. After receiving the target acquiring request, the server first acquires account numbers or identifiers of all contacts (which may include contacts in a phone contact book, or contacts in an application client such as QQ or WeChat) from the terminal A. Generally, a cloud photo album may be associated with a user's all account numbers of multiple clients or cell-phone numbers. Therefore, the server may acquire photo albums associated with the account numbers or identifiers of the above contacts and acquire the addresses of these photo albums. Next, the server may access the photo albums in sequence according to the above addresses to identify whether these photo albums include the photos containing the user I' image. Supposing a photo album B corresponding to a terminal B includes photos containing the user I's image, the server may return a number, a catalog and creation times of the photos containing the user I's image and identification information of the terminal B to the terminal A, and then these information are displayed by the terminal A. The user may select the photos that he/she wants to acquire via a selecting interface output by the terminal A. Then, the terminal A sends a request to the server. The server may control the terminal B to send the photos selected by the user to the terminal A.

The above embodiment is not limited to be applied to the above application scenario, but may be also applied to other application scenarios. According to the picture acquiring method provided by the above embodiment of this invention, when a target acquiring request made to a first terminal is detected, a target picture is detected in a target photo album corresponding to a second terminal other than the first terminal, and the first terminal is controlled to output acquisition response information indicating that the target picture exists in the second terminal. As such, there is no need to manually pick out a photo from photo albums when sharing photos with friends, thereby saving time and improving terminal usage efficiency.

It should be noted that, although in the drawings the operations of the method of this invention are described in a certain sequence, this does not require or imply that these operations must be executed according to the certain sequence or that the desired result can be achieved only when all the shown operations are executed. Instead, the execution sequence of the steps shown in the drawings may be changed. Additionally or alternatively, some steps may be omitted, multiple steps may be combined into one step and/or one step may be divided into multiple ones.

Corresponding to the above-described picture acquiring method embodiment, this invention also provides embodiments of a picture acquiring apparatus and of a system applying the apparatus.

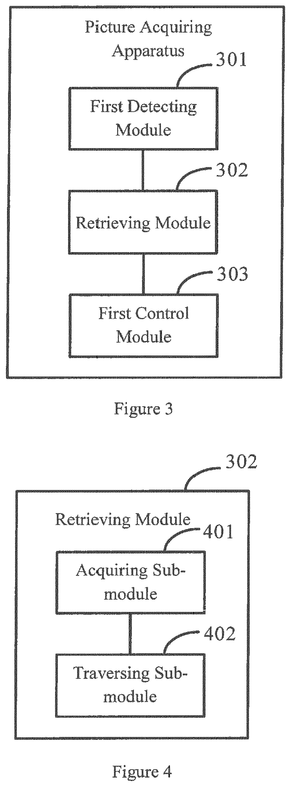

Fig. 3 is a block diagram of a picture acquiring apparatus according to an embodiment of the invention. As shown in Fig. 3, the apparatus comprises a first detecting module 301, a retrieving module 302 and a first control module 303.

The first detecting module 301 is configured to detect a target acquiring request made to a first terminal, the target acquiring request requesting acquisition of a target picture.

The retrieving module 302 is configured to detect the target picture in a target photo album corresponding to a second terminal other than the first terminal in response to detection of the target acquiring request.

The first control module 303 is configured to control the first terminal to output acquisition response information in response to detection of the target picture, the acquisition response information indicating that the target picture exists in the second terminal.

Fig. 4 is a block diagram of a picture acquiring apparatus according to another embodiment of the invention, which is based on the embodiment shown in Fig. 3. As shown in Fig. 4, the retrieving module 302 may comprise an acquiring sub-module 401 and a traversing sub-module 402.

The acquiring sub-module 401 is configured to acquire identification information of the target picture.

The traversing sub-module 402 is configured to traverse pictures in the target photo album corresponding to the second terminal to acquire the target picture.

In some optional embodiments, the identification information comprises at least one of human face characteristic information and animal fur characteristic information.

In other optional embodiments, the target photo album comprises at least one of a local photo album of the second terminal and a cloud photo album corresponding to the second terminal.

In yet other optional embodiments, the acquisition response information comprises at least one of: a number of target pictures included in the target photo album, a catalog of the target pictures included in the target photo album, creation times of the target pictures included in the target photo album and identification information of the second terminal.

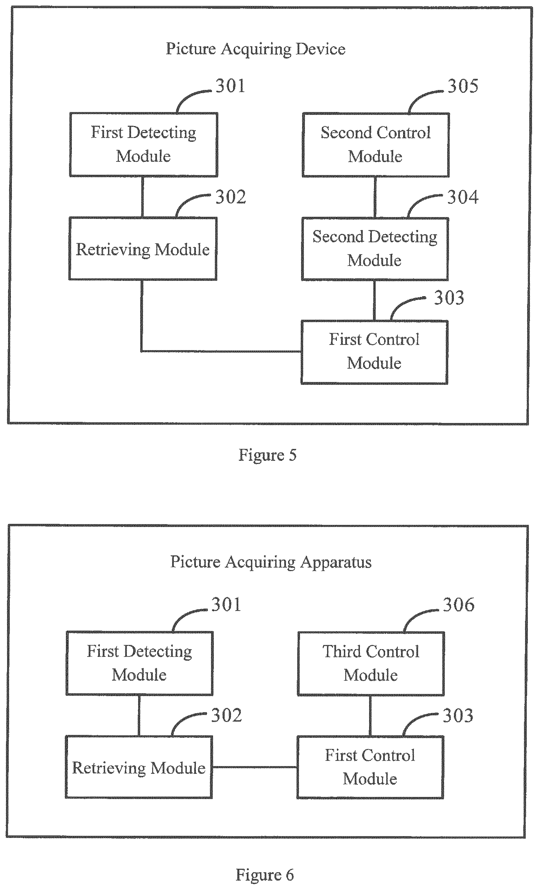

Fig. 5 is a block diagram of a picture acquiring apparatus according to yet another embodiment of the invention, which is based on the embodiment shown in Fig. 3. As shown in Fig. 5, the apparatus may further comprise a second detecting module 304 and a second control module 305.

The second detecting module 304 is configured to detect a selecting operation with respect to the catalog.

The second control module 305 is configured to control the second terminal to send a target picture indicated by the selecting operation to the first terminal, in response to detection of the selecting operation.

The acquisition response information comprises the catalog and the target picture indicated by the selecting operation.

Fig. 6 is a block diagram of a picture acquiring apparatus according to yet another embodiment of the invention, which is based on the embodiment shown in Fig. 3. As such in Fig. 6, the apparatus may further comprise a third control module 306.

The third control module 306 is configured to control the second terminal to send the target picture to the first terminal, in response to detection of the target picture, wherein the acquisition response information comprises the target picture.

It should be understood that the above apparatus may be pre-configured in a terminal or server, or may be loaded into a terminal or server by downloading or the like. The corresponding modules of the above apparatus may cooperate with modules of the terminal or server to implement the picture acquiring solutions.

Since the apparatus embodiments substantially correspond to the method embodiments, reference can be made to description of the method embodiments for relevant parts of the apparatus embodiments. The above apparatus embodiments are illustrative only. The modules described as separate members may or may not be physically separated. The members shown as blocks may or may not be physical units, and may be located at the same place or distributed among multiple network units. The objective of the solutions of this disclosure may be achieved by some selected ones or all of the modules according to the actual needs, as can be understood and implemented by those skilled in the art without exerting any inventive skill.

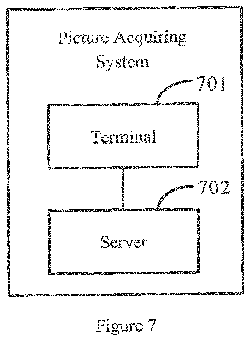

Fig. 7 is a block diagram of a picture acquiring system according to an embodiment of the invention. As shown in Fig. 7, the system comprises a terminal 701 and a server 702. The terminal 701 includes a first terminal and a second terminal.

The first terminal is configured to send a target acquiring request to the server, the target acquiring request requesting acquisition of a target picture.

The server is configured to: detect the target acquiring request made to the first terminal; detect the target picture in a target photo album corresponding to the second terminal other than the first terminal, in response to detection of the target acquiring request; and send a first control command to the first terminal in response to detection of the target picture, the first control command instructing the first terminal to output acquisition response information.

The first terminal is further configured to output the acquisition response information in response to the first control command, the acquisition response information indicating that the target picture exists in the second terminal.

Correspondingly, the present invention also provides a picture acquiring apparatus, comprising: a processor and a memory configured to store instructions executable by the processor. The processor is configured to: detect a target acquiring request made to a first terminal, the target acquiring request requesting acquisition of a target picture; detect the target picture in a target photo album corresponding to a second terminal other than the first terminal in response to detection of the target acquiring request; and control the first terminal to output acquisition response information in response to detection of the target picture, the acquisition response information indicating that the target picture exists in the second terminal.

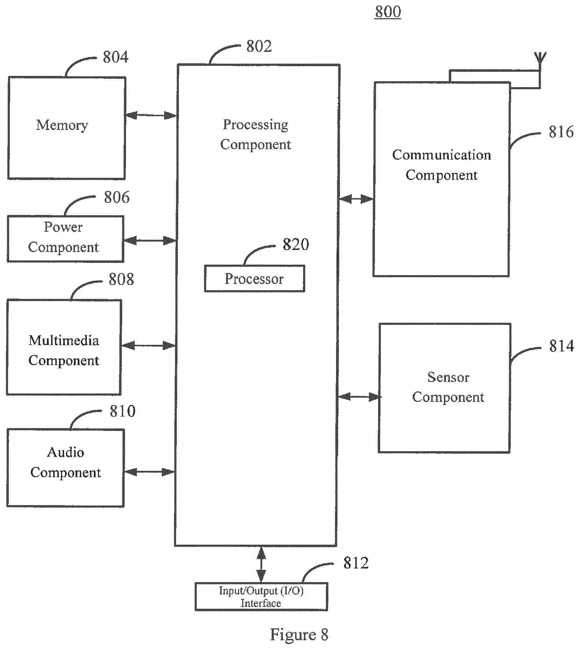

Fig. 8 is a schematic structural diagram of a picture acquiring apparatus 800 according to an embodiment of the invention. For example, the apparatus 800 may be a mobile phone, a computer, a digital broadcast terminal, a message transceiver device, a game console, a tablet device, a medical device, fitness equipment, a personal digital assistant or the like.

Referring to Fig. 8, the apparatus 800 may comprise one or more following components: a processing component 802, a memory 804, a power component 806, a multimedia component 808, an audio component 810, an input/output (I/O) interface 812, a sensor component 814 and a communication component 816.

The processing component 802 typically controls overall operations of the apparatus 800, such as the operations associated with display, phone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may comprise a multimedia module to facilitate the interaction between the multimedia component 808 and the processing component 802.

The memory 804 is configured to store various types of data to support operations of the apparatus 800. Examples of such data comprise instructions for any applications or methods operated on the apparatus 800, various kinds of data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may comprise a power supply management system, one or more power sources, and any other components associated with the generation, management, and distribution of power in the apparatus 800.

The multimedia component 808 comprises a screen providing an output interface between the apparatus 800 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 comprises one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, presence or absence of user's contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A picture acquiring method, comprising:
detecting (201) a target acquiring request made to a first terminal, the target acquiring request requesting acquisition of a target picture;
detecting (202) the target picture in a target photo album corresponding to a second terminal other than the first terminal, in response to detection of the target acquiring request; and
controlling (203) the first terminal to output acquisition response information in response to detection of the target picture, the acquisition response information indicating that the target picture exists in the second terminal.

2. The method according to claim 1, wherein detecting the target picture in the target photo album corresponding to the second terminal other than the first terminal comprises:
acquiring identification information of the target picture;
traversing pictures in the target photo album corresponding to the second terminal to acquire the target picture.

3. The method according to claim 2, wherein the identification information comprises at least one of human face characteristic information and animal fur characteristic information.

4. The method according to claim 1, wherein the target photo album comprises at least one of a local photo album of the second terminal and a cloud photo album corresponding to the second terminal.

5. The method according claim 1, wherein the acquisition response information comprises at least one of: a number of target pictures included in the target photo album, a catalog of the target pictures included in the target photo album, creation times of the target pictures included in the target photo album and identification information of the second terminal.

6. The method according to claim 5, wherein the acquisition response information comprises the catalog; and the method further comprises:
detecting a selecting operation with respect to the catalog; and
controlling the second terminal to send a target picture indicated by the selecting operation to the first terminal, in response to detection of the selecting operation, wherein
the acquisition response information comprises the target picture indicated by the selecting operation.

7. The method according to claim 1, wherein the method further comprises: controlling the second terminal to send the target picture to the first terminal, in response to detection of the target picture, wherein the acquisition response information comprises the target picture.

8. A picture acquiring apparatus, comprising:
a first detecting module (301) configured to detect a target acquiring request made to a first terminal, the target acquiring request requesting acquisition of a target picture;
a retrieving module (302) configured to detect the target picture in a target photo album corresponding to a second terminal other than the first terminal, in response to detection of the target acquiring request; and
a first control module (303) configured to control the first terminal to output acquisition response information in response to detection of the target picture, the acquisition response information indicating that the target picture exists in the second terminal.

9. The apparatus according to claim 8, wherein the retrieving module (302) comprises:
an acquiring sub-module (401) configured to acquire identification information of the target picture; and
a traversing sub-module (402) configured to traverse pictures in the target photo album corresponding to the second terminal to acquire the target picture, wherein the identification information comprises at least one of human face characteristic information and animal fur characteristic information.

10. The apparatus according to claim 8, wherein the target photo album comprises at least one of a local photo album of the second terminal and a cloud photo album corresponding to the second terminal.

11. The apparatus according to claim 8, wherein the acquisition response information comprises at least one of: a number of target pictures included in the target photo album, a catalog of the target pictures included in the target photo album, creation times of the target pictures included in the target photo album and identification information of the second terminal.

12. The apparatus according to claim 11, wherein the acquisition response information comprises the catalog; and the apparatus further comprises:
a second detecting module (304) configured to detect a selecting operation with respect to the catalog;
a second control module (305) configured to control the second terminal to send a target picture indicated by the selecting operation to the first terminal, in response to detection of the selecting operation, wherein the acquisition response information comprises the target picture indicated by the selecting operation; and a third control module (306) configured to control the second terminal to send the target picture to the first terminal, in response to detection of the target picture, wherein the acquisition response information comprises the target picture.

13. A picture acquiring apparatus, comprising:
a processor (820); and
a memory (804) configured to store instructions executable by the processor (820), wherein the processor (820) is configured to perform the method of any of claims 1-7.

14. A computer program including instructions for executing the steps of a picture acquiring method according to any one of claims 1 to 7, when said program is executed by a computer.

15. A recording medium readable by a computer and having recorded thereon a computer program including instructions for executing the steps of a picture acquiring method according to any one of claims 1 to 7.
